# DEMANDE DE BREVET EUROPEEN

(11) **EP 1 431 168 A1**
(43) Date de publication de la demande: **23.06.2004**
(21) Numéro de dépôt: 03293071.1
(22) Date de dépôt: 09.12.2003
(51) Int. Cl.: B62J 15/02

(54) **Système de raccordement d'une tringle double au moyeu de la roue d'un vélo**

(30) Priorité: 18.12.2002 FR 0216051
(71) Demandeur: ZEFAL, 45150 Jargeau (FR)
(72) Inventeur: Cagnion, Laurent, 77250 Villemer (FR)
(74) Mandataire: Pontet, Bernard

(57) **Abrégé**

Le système comporte deux pièces de raccordement 1, 3, l'une 1 destinée à la portion coudée de la tringle et l'autre 3 destinée au moyeu, et comportant des moyens d'encliquetage 10a,10b ; 18a, 18b des deux pièces 1, 3, permettant de détacher automatiquement la tringle 2a, 2b, du moyeu au delà d'un seuil de contrainte exercée sur la tringle, caractérisée en ce que la pièce de raccordement 1 à la tringle est amovible comprenant :
- un guide de pivotement dans lequel une première branche 2b est adaptée à pivoter ; et
- des moyens de butée 5 adaptés à coopérer avec la seconde branche 2a adaptés à bloquer le pivotement de ladite première branche 2b pour définir une position de fonctionnement à l'extrémité coudée de la tringle.
Avantages : la pièce 1 est amovible pouvant être facilement remplacée ; le système s'adapte à tout modèle de tringle quelque soit la longueur des branches.

## Description

La présente invention concerne un système pour raccorder une tringle double au moyeu de la roue d'un vélo.

D'une manière générale, une tringle sert d'entretoise pour raccorder un garde-boue au moyeu de la roue de vélo. La tringle visée selon l'invention est double, c'est à dire comportant deux branches. En outre, elle est du type réalisée généralement à partir d'une tige métallique pliée en deux pour former les deux branches. Chaque extrémité de branche est reliée au garde-boue tandis que la partie coudée de la tringle est destinée à être raccordée au moyeu de la roue.

Les systèmes de raccordement suivants permettant de libérer automatiquement la tringle du moyeu en cas de contrainte trop importante ont été proposés.

Dans le document EP 0 694 469, il est proposé un système selon lequel la partie coudée de la tringle est conformée en oeillet. Le système comporte en outre une pièce intermédiaire de raccordement dans laquelle l'oeillet est destiné à s'insérer et qui comporte un perçage transversalement pour une vis de fixation au moyeu de la roue du vélo. Des moyens d'encliquetage sont ménagés à l'intérieur de la pièce intermédiaire de raccordement adaptés à coopérer avec ledit oeillet de manière que ce dernier puisse être détaché au-delà d'une certaine force exercée dans l'axe de la tringle. Ce système présente l'inconvénient de nécessiter une conformation particulière de la tringle.

Le document EP 0 803 429 propose une autre solution qui permet de pallier cet inconvénient : le système est constitué de deux pièces : une pièce avec des moyens d'encliquetage femelles qui est fixée par moulage sur l'extrémité coudée de la tringle et une pièce avec des moyens d'encliquetage complémentaires mâles qui est fixée au moyeu de la roue. Les moyens d'encliquetage sont constitués pour la partie femelle d'une ouverture et pour la partie mâle d'un cliquet à deux rampes. Ce système présente l'inconvénient notamment de nécessiter une opération de moulage de la pièce de raccordement femelle sur la partie coudée de la tringle pour fixer ladite pièce.

La présente invention a pour but de proposer une solution qui pallie notamment cet inconvénient.

Elle propose un système de raccordement d'une tringle double branches au moyeu de la roue d'un vélo, ledit système comportant deux pièces de raccordement l'une destinée à la portion coudée de la tringle et l'autre destinée au moyeu, et comportant des moyens d'encliquetage des deux pièces permettant de détacher automatiquement la tringle du moyeu au delà d'un seuil de contrainte exercée sur la tringle, caractérisée en ce que la pièce de raccordement de tringle est amovible comprenant :
- un guide de pivotement dans lequel ladite première branche est adaptée à pivoter ; et
- des moyens de butée adaptés à coopérer avec la seconde branche adaptés à bloquer le pivotement de ladite première branche pour définir une position de fonctionnement à l'extrémité coudée de la tringle.

Ainsi, selon l'invention, la pièce de raccordement à la tringle est assemblée sur une première branche de tringle autour de laquelle elle est libre de pivoter excepté lorsqu'elle vient en butée contre la seconde branche de tringle. Cette position de butée, dans laquelle le pivotement est empêché correspond à la position de fonctionnement, c'est à dire la position dans laquelle la pièce de raccordement peut coopérer avec la pièce complémentaire de raccordement au moyeu. L'assemblage de la première branche dans le guide de la pièce de raccordement peut se faire latéralement par déformation élastique pour insérer la branche dans le guide ou bien, et de préférence, axialement en enfilant la pièce de raccordement dans le guide par l'extrémité libre de la branche de tringle.

Grâce à la construction de l'invention, on peut facilement enlever la pièce de raccordement à la partie coudée de tringle en la faisant pivoter autour de son axe de pivotement dans le guide et de manière à dégager la portion de branche des moyens de butée, puis par exemple en la faisant coulisser jusqu'à l'extrémité libre de la branche. Cela permet avantageusement de changer cette pièce si elle est abîmée sans avoir besoin de changer toute la tringle. En outre, le système selon l'invention peut s'adapter à tout modèle de tringle, quelque soit la longueur des branches de tringle.

Selon un mode de réalisation avantageux, les moyens de butée de la pièce de raccordement à la tringle sont constitués d'une rainure semi-cylindrique formant un siège de butée pour une portion de tringle. Cette particularité permet de réaliser une pièce qui occupe l'espace existant entre les branches de tringle dans la partie coudée de celle-ci sensiblement sans dépasser.

Selon également un mode de réalisation possible, les moyens d'encliquetage mâles sont ménagés en saillie sur la pièce de raccordement à la tringle, la pièce de raccordement au moyeu comportant un logement dans lequel est destinée à s'introduire une partie au moins de la pièce de raccordement de tringle et comportant des moyens d'encliquetage femelles adaptés à coopérer avec lesdits moyens d'encliquetage mâle. En option avantageuse, on peut prévoir que la pièce de raccordement à la partie coudée soit insérée complètement dans la pièce de raccordement au moyeu, avec les moyens d'encliquetage mâles et femelles disposés à l'intérieur du système. Cela permet de limiter sur l'extérieur du système les parties en saillie pouvant blesser un utilisateur et présentant un risque d'accrochage.

Selon d'autres caractéristiques secondaires avantageuses :
- les pièces du système sont réalisées d'un seul tenant par moulage ; dans la pièce de raccordement la rainure et le guide pivotement sont reliés par une paroi plane destinée à se trouver entre les branches de tringle dans la partie coudée et comportant au moins sur une de ses faces un cliquet ; la pièce de raccordement au moyeu de la roue est réalisée avec un logement s'ouvrant de manière à recevoir la pièce de raccordement à la tringle et comportant dans l'épaisseur de l'une au moins de ses parois une encoche ou ouverture de blocage de cliquet et, perpendiculairement à la direction d'introduction de la partie coudée de tringle, un perçage pour la fixation au moyeu de la roue ;
- la rainure bloquant la pièce de raccordement à la partie coudée de tringle est conçue pour s'ajuster autour de la branche de tringle avec une légère déformation du matériau de manière à bloquer la pièce de raccordement en position de fonctionnement.

D'autres caractéristiques et avantages de l'invention ressortiront de la description qui va suivre d'un exemple de réalisation, description faite en référence au dessin sur lequel :
- la figure 1 est une vue en élévation avant d'une pièce de raccordement à la tringle selon un mode de réalisation possible de l'invention ;
- la figure 2 est une vue en élévation arrière de la pièce de raccordement de la figure 1 ;
- la figure 3 est une vue de côté de la pièce de raccordement de la figure 1 selon la flèche III de la figure 1 ;
- la figure 4 est une vue de côté de la pièce de raccordement de la figure 1 selon la flèche IV de la figure 1 ;
- la figure 5 montre la pièce de raccordement des figures 1 à 4 enfilée sur l'une des branches d'une tringle double ;
- la figure 6 montre le système de raccordement selon l'invention dans son ensemble avec la pièce de raccordement des figures 1 à 5 en position de fonctionnement sur ladite tringle double et une pièce de raccordement au moyeu de la roue d'un vélo montrée en coupe longitudinale ; et
- la figure montre le système de la figure 5 avec la pièce de raccordement à la tringle encliquetée dans la pièce de raccordement au moyeu.

Selon l'exemple choisi et représenté sur les figures, un système selon l'invention comprend une première pièce de raccordement 1 destinée à être assemblée sur la partie coudée d'une tringle à deux branches 2a et 2b de section en coupe cylindrique, et une seconde pièce de raccordement 3 destinée à être fixée au moyeu de la roue d'un vélo. Ces deux pièces sont réalisées d'un seul tenant par moulage d'une matière synthétique.

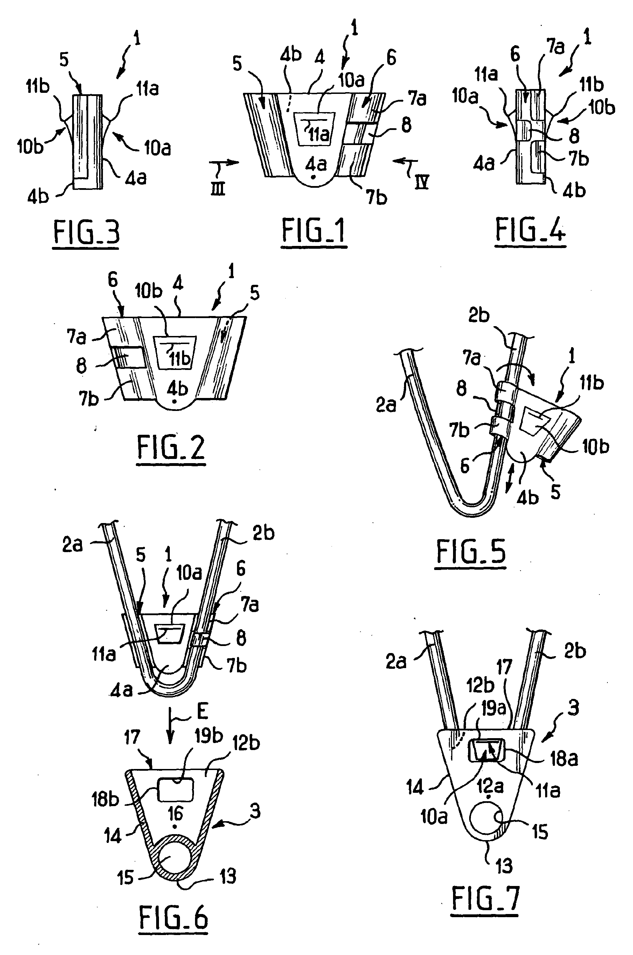

La pièce 1 comprend une paroi centrale 4 sensiblement triangulaire à deux faces plane avant 4a et arrière 4b, conformée pour venir se loger en largeur entre les branches 2a et 2b de la tringle et pour ne pas dépasser en épaisseur desdites branches. Le long sensiblement d'un bord de la paroi 4 est ménagée une rainure 5 de forme semi-cylindrique, conformée pour recevoir une branche de tringle, ici 2a (voir figure 6). Le long du bord opposé de la paroi 4 est ménagé un guide de pivotement 6 dans lequel est adaptée à être enfilée l'autre branche de tringle, ici 2b (par l'extrémité libre de celle-ci) et dans lequel ladite branche de tringle est adaptée à pivoter (voir figure 5). La direction de la rainure 5 et la direction du guide de pivotement 6 sont concourantes, définies de sorte que la pièce 1 ne puisse adopter qu'une seule position de fonctionnement à une hauteur donnée sur la partie coudée de la tringle, autorisant l'encliquetage dans la pièce 3 comme sur la figure 7, correspondant au logement des branches l'une dans le guide 6 et l'autre dans la rainure 5. Cette hauteur correspond au niveau le plus bas où les branches sont encore rectilignes avant d'être incurvées. Plus précisément selon l'exemple choisi, le guide de pivotement 6 est défini côté de la face arrière 4b de deux pattes 7a et 7b semi cylindriques avec un espace entre elles et du côté de la face avant en regard de l'espace d'une patte également semi-cylindrique 8.

Les moyens d'encliquetage comprennent sur la pièce de raccordement 1, deux cliquets 10 a et 10b, chacun ménagé en saillie sur l'une des faces de la paroi centrale 4, respectivement 4a et 4b, et en saillie par rapport aux branches 2a et 2b lorsque celles-ci sont en place comme sur la figure 6. Chaque cliquet 10a, 10b, comprend classiquement deux rampes inverses de part et d'autre d'un sommet, respectivement 11a, 11b, qui s'étend perpendiculairement à la direction d'encliquetage de la pièce 1 dans la pièce 3 (flèche E sur la figure 6). La pente et la longueur des rampes est définies en fonction des caractéristiques d'encliquetage et de dé-encliquetage recherchées.

Sur la figure 6 est représentée en coupe la pièce complémentaire 3 qui est fixée au moyeu. Il s'agit d'une pièce avec deux parois planes parallèles, une paroi avant 12a et une paroi arrière 12b, de forme sensiblement triangulaire avec une extrémité intérieure arrondie 13, et reliées entre elles par un bord latéral 14 de forme en "V" dans le plan des figures 6 et 7. Un perçage 15, pour une vis de fixation au moyeu de la roue du vélo, est ménagé dans une zone de matière de la pièce 3, à proximité de l'extrémité arrondie 13, et s'étendant perpendiculairement aux paroi 12a et 12b. Un logement 16, destiné à recevoir complètement la pièce de raccordement 1, est défini entre les parois 12a et 12b, le bord latéral 14 au dessus du perçage 15. Ce logement possède une fente d'introduction 17 à l'opposé de l'extrémité arrondie 13.

Les moyens d'encliquetage femelles, destinés à coopérer avec les cliquets mâles 10a et 10b de la pièce de raccordement 1, comprennent deux fenêtres 18a et 18b ménagées respectivement dans la paroi avant 12a et dans la paroi arrière 12b, présentant chacune un bord de butée, respectivement 19a, 19b, contre lequel le sommet de cliquet, respectivement 11a, 11b, est adapté à buter, lorsque la pièce 1 est insérée dans la pièce 3 selon la flèche E de la figue 6 et comme représenté sur la figure 7. En outre, les fenêtres 19a et 19b sont placées à une hauteur telle que lorsque les cliquets sont actifs, la pièce 1 se trouve entièrement dissimulée à l'intérieur de la pièce 3, comme on le voit sur la figure 7, à l'exception des cliquets qui sont visibles à travers les fenêtres.

Le fonctionnement du système de raccordement selon l'invention est le suivant. Comme représenté sur la figure 5, la pièce de raccordement 1 est enfilée sur l'une des branches, ici 2b, de la tringle double, par l'extrémité libre de celle-ci. Puis la pièce 1 est descendue jusqu'à la partie coudée de la tringle où elle est pivotée de manière à faire correspondre la rainure 5 avec l'autre branche de tringle. Dans cette position de fonctionnement (telle que représentée à la figure 6), la tringle munie de la pièce de raccordement 1 est introduite dans le logement 16 de la seconde pièce de raccordement 3 au moyeu par la fente d'introduction 17, dans le plan de la figure, suivant la flèche E, jusqu'à ce que les cliquets 10a, 10b, se bloquent dans les fenêtres 18a, 18b. Dans cette position (figure 7), la pièce 1 est bloquée dans la pièce 3. Seule une traction suffisante, intentionnelle ou accidentelle, exercée directement ou indirectement sur les tringles entraîne le désaccouplement automatique des deux pièces en libérant les cliquets des ouvertures.

Il va de soi que des variantes de réalisation sont possibles, notamment concernant le choix des moyens d'encliquetage, de leur nature (bosse/cavité), de leur nombre, de leur disposition sur l'une ou l'autre des pièces (par exemple dans l'exemple décrit, une fenêtre unique pourrait être ménagée à travers la paroi 4 et des cliquets complémentaires ménagés en saillie dans le logement 5). Par ailleurs, le guide de pivotement de la pièce de raccordement à la tringle peut être constitué d'un canal continu de section cylindrique au lieu d'une alternance de pattes semi-cylindriques. En outre encore, le système décrit et représenté comporte des pièces conçues pour être les plus petites possibles et sans parties dépassantes, il va de soi que d'autres formes sont possibles.

## Revendications

1. Système de raccordement d'une tringle double branches (2a,2b) au moyeu de la roue d'un vélo, ledit système comportant deux pièces de raccordement (1,3) l'une (1) destinée à la portion coudée de la tringle et l'autre (3) destinée au moyeu, et comportant des moyens d'encliquetage (10a,10b ; 18a, 18b) des deux pièces (1,3) permettant de détacher automatiquement la tringle (2a,2b) du moyeu au delà d'un seuil de contrainte exercée sur la tringle, **caractérisée en ce que** la pièce de raccordement (1) à la tringle est amovible comprenant :
- un guide de pivotement dans lequel une première branche (2b) est adaptée à pivoter ; et
- des moyens de butée (5) adaptés à coopérer avec la seconde branche (2a) adaptés à bloquer le pivotement de ladite première branche (2b) pour définir une position de fonctionnement à l'extrémité coudée de la tringle.

2. Système selon la revendication 1, **caractérisé en ce que** les moyens de butée sont constitués d'une rainure (5) de forme sensiblement semi-cylindrique formant un siège de butée pour une portion de la seconde branche 2b).

3. Système selon la revendication 1 ou 2, **caractérisé en ce que** le guide de coulissement et de pivotement (6) est défini par une alternance de pattes semi-cylindriques (7a,8,7b).

4. Système selon la revendication 1 ou 2, **caractérisé en ce que** le guide de pivotement et de coulissement (6) est défini par une paroi cylindrique.

5. Système selon l'une quelconque des revendications 1 à 4, **caractérisé en ce que** les moyens d'encliquetage comprennent des moyens mâles (10a,10b) ménagés en saillie sur la pièce (1) de raccordement à la tringle, la pièce (3) de raccordement au moyeu comportant un logement (16) dans lequel est destinée à s'introduire une partie au moins de la pièce (1) de raccordement à la tringle et comportant des moyens d'encliquetage femelles (18a, 18b) adaptés à coopérer avec lesdits moyens d'encliquetage mâle.

6. Système selon la revendication 5, **caractérisé en ce que** les moyens d'encliquetage mâles ménagés sur la pièce (1) de raccordement à la tringle comprennent au moins un cliquet (10a,10b) ménagé entre les moyens de butée (5) et le guide de pivotement (6).

7. Système selon la revendication 5 ou 6, **caractérisé en ce que** les moyens d'encliquetage femelles ménagés sur la pièce (3) de raccordement au moyeu comprennent au moins une fenêtre (18a, 18b) ménagée dans l'une des parois (12a,12b) du logement (16).

8. Système selon la revendication 6 ou 7, **caractérisé en ce qu'**il comporte deux cliquets(10a,10b) ménagés sur des faces opposées de parois planes (4a,4b) prévues entre les moyens de butée (5) et le guide de coulissement et de pivotement (6) de la pièce (1) de raccordement à la tringle.

9. Système selon l'une des revendications 5 à 8, **caractérisé en ce que** la pièce (1) de raccordement à la tringle est conformée pour s'insérer entièrement dans le logement (16) de la pièce (3) de raccordement au moyeu.

10. Système selon l'une quelconque des revendications précédentes, **caractérisé en ce que** les pièces sont réalisées d'un seul tenant par moulage.
